# EUROPÄISCHE PATENTSCHRIFT

(11) **EP 1 415 892 B1**
(45) Veröffentlichungstag und Bekanntmachung des Hinweises auf die Patenterteilung: **30.08.2006**
(21) Anmeldenummer: 03021596.6
(22) Anmeldetag: 25.09.2003
(51) Int. Cl.: B62D 5/06, B62D 5/04

(54) **Servo-Lenkanlage**
Hydraulic system for a servo steering of a motor vehicle
Système hydraulique pour la direction assistée d'une voiture

(30) Priorität: 29.10.2002 DE 10250300
(43) Veröffentlichungstag der Anmeldung: 06.05.2004
(73) Patentinhaber: Bayerische Motoren Werke Aktiengesellschaft, 80809 München (DE)
(72) Erfinder: König, Roland, 82392 Habach (DE)

(56) Entgegenhaltungen:
- WO-A-01/54960
- US-A- 5 267 627

## Beschreibung

Die Erfindung betrifft eine Servo-Lenkanlage für ein Kraftfahrzeug mit Momentenunterstützung durch einen Elektromotor nach dem Oberbegriff des Anspruchs 1. Zum bekannten Stand der Technik wird auf die US 5,267,627 sowie auf die WO 01/54960 A1 verwiesen.

Es sind bereits eine Vielzahl unterschiedlicher Hilfskraft-Lenkanlagen für Kraftfahrzeuge bekannt, also Systeme für Servo-Lenkanlagen, mit deren Hilfe der Fahrer des Fahrzeugs beim Aufbringen des jeweils erforderlichen Lenkmoments unterstützt wird. Die "klassische" Servolenkung wird dabei durch hydraulische Systeme gebildet, so bspw. in Form einer Zahnstangen-Hydrolenkung, wobei das sog. Hydrolenkgetriebe von einer vom Fzg.-Antriebsaggregat angetriebenen Hydraulikpumpe versorgt bzw. angetrieben wird. Zumindest bei Personenkraftwagen werden diese Hydrolenkgetriebe als sog. "offene Mitte"-Lenkgetriebe eingesetzt, d.h. dass das Hydrauliköl ständig umgepumpt wird. Zwar sind hiermit hohe Lenkleistungen übertragbar und es zeichnet sich das Lenksystem durch eine hohe Dynamik aus, jedoch ist auch die Verlustleistung relativ hoch, was im Hinblick auf den Verbrauch und die Emissionen des Fzg.-Antriebsaggregats ungünstig ist. Auch verursacht das ständig mit hoher Geschwindigkeit fließende Hydrauliköl Geräusche und muss teilweise separat gekühlt werden.

Demgegenüber günstiger sind hydraulische Servolenkungen mit geschlossener Mitte (vgl. bspw. DE 197 33 032 C1), bei denen ein hydraulischer Druckspeicher vorhanden ist, jedoch sind diese Systeme hinsichtlich ihres Aufbaus und der Anordnung im Fahrzeug noch komplexer als ein (nachteiligerweise) bereits relativ komplexes Hydrolenkgetriebe mit "offener Mitte". Eine weitere Verbesserung bieten hier Hydrolenkgetriebe mit Antrieb durch eine Elektromotor-Hydraulikpumpen-Kombination, bei denen also die Hydraulikpumpe nicht mehr (mechanisch direkt) vom Fzg.-Antriebsmotor angetrieben wird, sondern von einem eigenständigen Elektromotor, der hinsichtlich seiner Leistungsabgabe vorteilhafterweise den jeweiligen Anforderungen entsprechend geregelt werden kann. Diesen Weg geht bspw. die in der EP 1 018 464 A2 beschriebene Servo-Lenkanlage, wobei als kennzeichnend für derartige Systeme herausgestellt werden kann, dass der Elektromotor, der die Hydraulikpumpe, welche das Hydrolenkgetriebe mit Hydraulikmedium versorgt, zwar mit unterschiedlicher Drehzahl (und somit unterschiedlicher Leistungsabgabe), jedoch stets im gleichen Drehsinn betrieben wird. Die Elektromotor-Hydraulikpumpen-Kombination stellt nämlich nur eine ausreichende Menge von Hydraulikmedium unter ausreichendem Druck bereit, wohingegen die Richtung der Momentenunterstützung in Richtung des Lenkeinschlags durch das Hydrolenkgetriebe bzw. eine Ventileinheit desselben (im Falle einer Zahnstangen-Hydrolenkung im sog. Steuerkopf angeordnet) vorgegeben wird. Derartige Hydrolenkgetriebe mit Antrieb durch eine Elektromotor-Hydraulikpumpen-Kombination zeichnen sich durch ein gutes Lenkgefühl für den Fahrer aus und es kann vorteilhafterweise die Elektromotor-Hydraulikpumpen-Kombination praktisch an beliebiger Stelle im Fahrzeug verbaut werden. Der Wirkungsgrad ist jedoch relativ ungünstig und die Anzahl der Systemkomponenten relativ hoch. Nachteilig ist jedoch insbesondere, dass mit vertretbarer Dimensionierung der einzelnen Komponenten nur eine relativ niedrige Lenkleistung und Systemdynamik erzielt werden kann, weshalb derartige Systeme an Personenkraftwagen praktisch nur für Klein- und Mittelklasse-Fahrzeuge geeignet sind.

Ferner sind Servo-Lenkanlagen mit Antrieb durch einen Elektromotor mit nachgeschaltetem mechanischem Getriebe bekannt, wozu bspw. auf die DE 199 51 548 A1 verwiesen wird. Dabei ist das dem als Servounterstützung fungierenden Elektromotor zugeordnete mechanische Getriebe auf geeignete Weise mit dem vom Fahrer selbst manuell betätigten Lenkgetriebe, mit Hilfe dessen letztlich ein Einschlagwinkel an den lenkbaren Fzg.-Rädern hervorgerufen wird, gekoppelt. Kennzeichnend für derartige Anlagen ist dabei, dass der Drehsinn des Elektromotors mit der Richtung des Lenkeinschlags korrespondiert, d.h. für das Befahren einer Rechtskurve muss der Elektromotor in die entgegengesetzte Richtung drehen als beim Befahren einer Linkskurve. Diese Servo-Lenkanlagen bieten gegenüber einer Hydrolenkung (der bekannten Bauarten) eine erhebliche Verbrauchsreduktion und erlauben vorteilhafterweise auch eine "aktive" Servounterstützung, d.h. bspw. einen aktiven Lenkungsrücklauf. Ferner zeichnen sie sich durch ihre Kompaktheit aus und benötigen vorteilhafterweise kein offenes Hydrauliksystem. Nachteilig ist jedoch die teilweise sehr schlechte Lenkungs- bzw. Fahrbahn-Rückmeldung an den Fahrer. Hinsichtlich des an den Fahrer übermittelten Lenkgefühls handelt es sich um eine "tote" Lenkung, was insbesondere durch die Trägheit des Elektromotors sowie durch die Reibung im mechanischen Getriebe verursacht wird.

Schließlich sind aus den eingangs genannten Schriften (US 5,267,627 oder WO 01/54960 A1) Servo-Lenkanlagen nach dem Oberbegriff des Anspruchs 1 der vorliegenden Erfindung bekannt, mit einem Elektromotor sowie einem "hydraulischen Getriebe", wobei der Drehsinn des im Hinblick auf einen guten Wirkungsgrad auch stillsetzbaren Elektromotors dem jeweiligen Lenkeinschlag entsprechend veränderbar ist, so dass die von diesem angetriebene Hydraulikpumpe ebenfalls zweiseitig wirksam ist, d.h. in Abhängigkeit vom Drehsinn entweder in eine linke oder in eine rechte Arbeitskammer einer Servo-Zylinder-Kolbeneinheit fördert und dementsprechend eine Unterstützungskraft beim Einschlagen der lenkbaren Fzg.-Räder nach rechts oder links aufbringt.

Bei diesem bekannten Stand der Technik ist in einer die beiden Seiten der Servo-Zylinder-Kolbeneinheit bzw. des Servo-Kolbens hydraulisch miteinander verbindenden Kurzschluss-Leitung ein Schaltventil vorgesehen, welches entweder eine geschlossene oder eine offene Stellung einnehmen kann. Im erstgenannten Fall kann die Servo-Zylinder-Kolbeneinheit wirksam werden, im zweitgenannten Fall hingegen nicht, da dann von der Hydraulikpumpe gefördertes Hydraulikmedium an der Servo-Zylinder-Kolbeneinheit vorbei weiter verbrauchsreduzierend quasi im Kurzschluss umgewälzt wird. Mit einer Umschaltung zwischen diesen beiden Zuständen ist für den Fahrer des Kraftfahrzeugs jedoch ein deutlicher Sprung hinsichtlich des Unterstützungsmomentes spürbar.

Ausgehend von diesem bekannten Stand der Technik hat sich die Erfindung die Aufgabe gestellt, eine Servo-Lenkanlage nach dem Oberbegriff des Anspruchs 1, die sich gemäß der obigen Schilderung durch einen minimierten und somit nahezu optimierten Energieverbrauch auszeichnet, hinsichtlich des an Fahrer übermittelten Lenkgefühls zu verbessern.
Die Lösung dieser Aufgabe ist dadurch gekennzeichnet, dass das Ventil in der die beiden Seiten des Servo-Kolbens hydraulisch miteinander verbindenden Kurzschluss-Leitung ein hinsichtlich seines Durchflussquerschnitts veränderliches Drosselventil ist, das von einer elektronischen Steuereinheit geeignet angesteuert wird, um eine im wesentlichen stufenlose Zukopplung oder Abkopplung der Momentenunterstützung durch den Elektromotor zu erzielen.

Ein hydraulisches Getriebe zwischen dem die Servo-Unterstützung bietenden Elektromotor, der in seinem Drehsinn entsprechend der Richtung des Lenkeinschlags umkehrbar ist, und dem letztlich den Rad-Einschlag erzeugenden Element, so bspw. einer Zahnstange, die weiterhin wie üblich vom Fahrer des Fahrzeugs bei gewünschter Kurvenfahrt auch direkt verlagert wird, das einfach an das vom Fahrer betätigte Lenk-Getriebe angekoppelt werden kann, vermittelt dem Fahrer zunächst ein erheblich besseres Lenkgefühl als ein mechanisches Getriebe. Der Fahrer erhält somit eine gute Fahrbahn-Rückmeldung und kann die dort auftretenden Kräfte (insbesondere Reifen-Seitenkräfte) gut und direkt spüren, was für eine gute Einschätzung der aktuellen Fahrsituation sehr hilfreich ist.

Ein solches hydraulisches Getriebe kann relativ einfach aufgebaut sein; so können übliche Komponenten bekannter Hydrolenkgetriebe verwendet werden. Bspw. kann ein in einem Zylinder längsverschiebbar angeordneter und beidseitig mit Hydraulikmedium beaufschlagbarer sog. Servo-Kolben mit dem einen Einschlagwinkel an den lenkbaren Fahrzeug-Rädern hervorrufende Element, bspw. einer Zahnstange, die wie üblich vom Fahrer über die Lenkspindel sowie ein daran vorgesehenes Ritzel verschoben bzw. verlagert wird, verbundenen sein. Besonders vorteilhaft ist es dabei, wenn der Servo-Kolben in Abhängigkeit vom Drehsinn des Elektromotors bzw. einer von diesem angetriebenen und wahlweise linksdrehenden oder rechtsdrehenden und somit zweiseitig wirksamen Hydraulikpumpe drehsinnabhängig auf einer seiner beiden Seiten mit Hydraulikdruck beaufschlagt wird, während gleichzeitig auf der anderen Seite des in einem Zylinder oder dgl. geführten Servo-Kolbens anliegender Hydraulikdruck abgebaut wird. Ist diese andere Seite des Servo-Kolbens dabei mit der dann als Saugseite fungierenden Seite der zweiseitig wirksamen Hydraulikpumpe im wesentlichen direkt verbunden, so kann ein geschlossener Hydraulik-Kreislauf umgesetzt werden, mit sämtlichen damit verbunden Vorteilen, wie geringer Bauaufwand, maximale Dichtheit über der gesamten Lebensdauer usw.. Selbstverständlich kann es dabei erforderlich sein, in diesem geschlossenen Hydraulik-Kreislauf ein geeignetes Ausgleichsvolumen oder dgl. vorzusehen.

Erfindungsgemäß noch weiter verbessert werden kann das dem Fahrer übermittelte Lenkgefühl, wenn die besagte Einheit von Elektromotor und hydraulischem Getriebe im wesentlichen stufenlos von der Servo-Lenkanlage abgekuppelt werden kann. Hierfür ist in einer die beiden Seiten des Servo-Kolbens hydraulisch miteinander verbindenden Kurzschluss-Leitung ein hinsichtlich seines Durchflussquerschnitts veränderliches Drosselventil vorgesehen, das von einer elektronischen Steuereinheit geeignet angesteuert wird, um eine im wesentlichen stufenlose Zukopplung oder Abkopplung der Momentenunterstützung durch den Elektromotor zu erzielen.

Die genannte elektronische Steuereinheit kann dabei auch den Elektromotor geeignet ansteuern, der dann nur solange und in einem solchen Drehsinn betrieben wird, wie dies vom Fahrer des Fahrzeugs mit seiner Lenkhandhabe im Hinblick auf einen gewünschten Lenkeinschlag der lenkbaren Fzg.-Räder vorgegeben wird, wobei neben dem Drehsinn auch die Drehgeschwindigkeit des Elektromotors geeignet vorgegeben werden kann. Aber auch im Hinblick auf die Ansteuerung bzw. Veränderung des Durchflussquerschnitts des genannten Drosselventils kann die elektronische Steuereinheit verschiedene Eingangssignale verarbeiten. Hierzu zählt insbesondere ein das aktuelle Lenkmoment wiedergebendes Signal, das mit Hilfe eines Drehmomentsensors, der bspw. auf einer Eingangswelle des vom Fahrer betätigten Lenkgetriebes angeordnet ist, ermittelt werden kann. Weiterhin in der elektronischen Steuereinheit berücksichtigt werden kann die aktuelle Fahrgeschwindigkeit des Fahrzeugs und/oder dessen Giergeschwindigkeit. Weitere mögliche Randbedingungen, die Berücksichtigung finden können, sind der vom Fahrer vorgegebene Lenkwinkel, die vorgegebene Lenkwinkel-Änderungsgeschwindigkeit, ggf. der an verschiedenen Stellen im Hydraulik-Kreislauf mittels dort vorgesehener Drucksensoren bestimmte Druck, die Temperatur des Elektromotors und weiteres mehr.

Als Elektromotor kann bevorzugt ein sog. bürstenloser Gleichstrommotor ("Brushless-DC-Motor") zum Einsatz kommen, da dieser sicher und einfach einen kontrollierten Schrittbetrieb erlaubt, wobei vorteilhafterweise auch das abgegebene Motor-Moment veränderbar ist. Auch damit ist die entsprechend über die Hydraulikpumpe erzeugte Unterstützungskraft beim Lenken in gewissem Maße variierbar. Entsprechend den vorgenannten Eingangsgrö-βen kann dann der Elektromotor betrieben werden. Im Sinne einer vorteilhaften Weiterbildung kann aber auch eine in ihrer Förderleistung variable Hydraulikpumpe im hydraulischen Getriebe zum Einsatz kommen, d.h. vom Elektromotor angetrieben werden. Dann ist die Hydraulikpumpe eine sog. Verstellpumpe, deren Fördermenge bei konstanter Antriebsdrehzahl - diese ist vom die Pumpe antreibenden Elektromotor vorgegeben - veränderlich ist. Hiermit kann eine erfindungsgemäße Servo-Lenkanlage unter Verwendung wirtschaftlich dimensionierter Elektromotoren (auch unter den gegebenen Randbedingungen, bspw. der im Fzg.-Bordnetz verfügbaren elektrischen Spannung) auch an schwereren Kraftfahrzeugen eingesetzt werden, die insbesondere beim Parkieren erheblich höhere Lenkkräfte benötigen als kleinere oder mittlere (bspw.) Personenkraftwagen. Ggf. muss dann bei Bedarf von höherer Lenkleistung eine geringere Dynamik des Systems akzeptiert werden, jedoch ist dies in der Regel (so auch für den angesprochenen Fall des Parkierens) unerheblich.

Die beigefügte Prinzipskizze zeigt ein bevorzugtes Ausführungsbeispiel der vorliegenden Erfindung, nämlich lediglich prinzipiell dargestellt die wesentlichen Elemente einer erfindungsgemäßen Servo-Lenkanlage für ein Kraftfahrzeug. Dabei ist mit der Bezugsziffer 1 ein Elektromotor ("M") bezeichnet, der eine zweiseitig wirkende Hydraulikpumpe 2 antreibt. Diese ist in einem geschlossenen Hydraulik-Kreislauf 9 angeordnet, zu dem weiterhin ein Zylinder 10. gehört, in dem längsverschiebbar ein Servo-Kolben 3 angeordnet ist. Dieser Servo-Kolben 3 ist mit einer Zahnstange 15 verbunden, die ebenso wie der Servo-Kolben 3 innerhalb eines Gehäuses eines Lenkgetriebes 11 längsverschiebbar ist. Hier ist die Verzahnung der Zahnstange 15 nicht sichtbar, da sich diese im nicht aufgebrochenen Abschnitt des Lenkgetriebe-Gehäuses 11 befindet. Grundsätzlich bildet hier somit der Servo-Kolben 3 zusammen mit der Zahnstange wie bei Zahnstangen-Lenksystemen üblich ein Element, welches (über zwischengeschaltete, nicht dargestellte Spurstangen) letztlich einen Einschlagwinkel an den (ebenfalls nicht dargestellten) lenkbaren Rädern des Kraftfahrzeugs hervorruft.

Angesteuert wird das Lenkgetriebe 11 entsprechend dem Wunsch oder der Vorgabe des Fzg.-Fahrers, der hierzu wie üblich ein Lenkrad betätigt, dessen Drehbewegung über eine Lenkspindel 12, an deren dem Lenkrad gegenüberliegenden Ende ein mit der Zahnstange 15 des Lenkgetriebes, genauer mit deren Verzahnung kämmendes Ritzel vorgesehen ist, und über eben dieses Ritzel auf die besagte Zahnstange übertragen wird. An der Lenkspindel 12 ist ein Drehmomentsensor 4 ("TS") angeordnet, mit Hilfe dessen das jeweilige Lenkmoment ermittelt werden kann. Dieses wird einer elektronischen Steuereinheit 5 ("µP") mitgeteilt. In dieser elektronischen Steuereinheit 5 werden neben dem Lenkmoment ("TS") weitere Eingangsgrößen 7 bzw. Randbedingungen 7 verarbeitet bzw. berücksichtigt, so bspw. (unter der Bezugsziffer 7 zusammengefasst) die Fzg.-Fahrgeschwindigkeit, die Lenkwinkel-Änderungsgeschwindigkeit, der Lenkwinkel, die Fzg.-Giergeschwindigkeit, die Temperatur des Elektromotors 1 sowie Signale von Drucksensoren 8 ("p"), die an hier zwei relevanten Stellen des Hydraulik-Kreislaufs 9 vorgesehen sind.

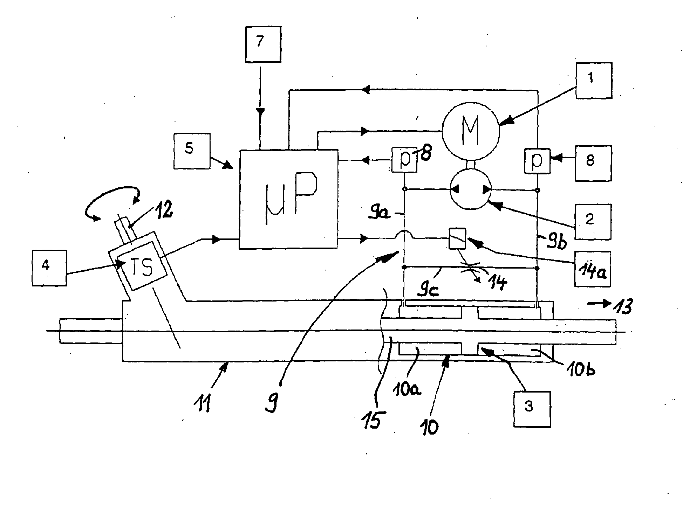

Nochmals auf diesen Hydraulik-Kreislauf 9 eingehend wurde bereits erläutert, dass die Hydraulikpumpe 2 ein geeignetes Hydraulikmedium entweder in eine in der Figur links des Servo-Kolbens 3 liegende Kammer 10a des Zylinders 10 oder in eine in der Figur rechts des Servo-Kolbens 3 liegende Kammer 10b des Zylinders 10 fördern kann, und zwar in Abhängigkeit von der Pumpen-Förderrichtung, die direkt an die Drehrichtung des in seinem Drehsinn umkehrbaren Elektromotors 1 gekoppelt ist. Dabei ist die (linke) Kammer 10a mit der ersten (linken) Seite der Hydraulikpumpe 2 über eine Hydraulikleitung 9a und die (rechte) Kammer 10a mit der zweiten (rechten) Seite der Hydraulikpumpe 9 über eine Hydraulikleitung 9b verbunden. Baut nun die Hydraulikpumpe 2 bspw. in der linken Kammer 10a einen (zusätzlichen) Hydraulikdruck auf und gleichzeitig hiermit in der rechten Kammer 10b den dort herrschenden Hydraulikdruck zumindest teilweise ab, so entsteht hierdurch eine auf den Servo-Kolben 3 wirkende Kraft, die diesen gemäß Pfeilrichtung 13 nach rechts zu verschieben trachtet. Wenn nun die Hydraulikpumpe 2 bzw. der Elektromotor 1 in dieser beschriebenen Weise angesteuert wird, während der Fzg.-Fahrer über die Lenkspindel 12 ein in der gleichen Richtung wirkendes Moment in das Lenkgetriebe 11 einleitet, so dass die darin enthaltene Zahnstange 15 ebenfalls gemäß Pfeilrichtung 13 nach rechts verschoben wird, so wird diese Zahnstangen-Verschiebebewegung, die einen Einschlagwinkel an den lenkbaren Fzg.-Rädern hervorruft, durch den an die Zahnstange 15 angekoppelten Servo-Kolben 3 unterstützt. Die "Unterstützungs-Leistung" wird dabei vom Elektromotor 1 aufgebracht, der wie beschrieben über ein sog. "hydraulisches Getriebe", das im wesentlichen durch die Hydraulikpumpe 2 sowie den Zylinder 10 mit dem Servo-Kolben 3 gebildet wird, mit dem einen Einschlagwinkel an den lenkbaren Fzg.-Rädern hervorrufenden Element, nämlich hier der Zahnstange 15 des Lenkgetriebes 11, verbunden ist.

Diese beschriebene Servo-Unterstützung durch den Servo-Kolben 3 soll dabei in weitem Maße hinsichtlich ihrer Intensität veränderbar sein, weshalb zwischen den beiden Hydraulikleitungen 9a und 9b eine sog. Kurzschluss-Leitung 9c vorgesehen ist, die quasi parallel zum Zylinder 10 angeordnet diese beiden Hydraulikleitungen 9a und 9b miteinander verbindet bzw. die beiden Seiten des Servo-Kolbens 3 hydraulisch miteinander verbindet. In dieser Kurzschluss-Leitung 9c ist ein hinsichtlich seines Durchflussquerschnitts veränderliches Drosselventil 14 vorgesehen, das von einer geeigneten Stelleinheit 14a gezielt eingestellt werden kann. Ist dieses Drosselventil 14 vollständig geschlossen, so wird bei Betrieb der Hydraulikpumpe 2 (bzw. des Elektromotors 1) das geförderte Hydraulikmedium in Abhängigkeit von der aktuellen Förderrichtung vollständig in die jeweilige Kammer 10a bzw. 10b des Zylinders 10 gefördert. Dann stellt sich - wie im vorhergehenden Absatz geschildert - eine maximale Servo-Unterstützung ein. Ist hingegen das Drosselventil 14 vollständig geöffnet, so wird praktisch kein Hydraulikmedium in die jeweilige Kammer 10a bzw. 10b des Zylinders gelangen, sondern es wird das Hydraulikmedium quasi im kleinen Kurzschlusskreislauf im wesentlichen vollständig über die Kurzschlussleitung 9c umgewälzt, so dass praktisch kein Druckaufbau bzw. Druckabbau in den Kammern 10a bzw. 10b des Zylinders 10 stattfindet und folglich keine Servounterstützung bei einem vom Fahrer initiierten Lenkeinschlag erfolgt. Während der letztgenannte Zustand bspw. bei einer Autobahnfahrt mit hoher Geschwindigkeit vorliegt, wobei der Fzg.-Fahrer vorteilhafterweise eine optimale Lenkungs-Rückmeldung erhält, kann der erstgenannte Zustand bspw. für das Parkieren des Fahrzeugs eingestellt werden. In diesem Fall ist die Lenkungs-Rückmeldung zwar weniger befriedigend, jedoch ist dies in diesem Fahr- oder Betriebszustand unerheblich.

Über eine Variation des Durchflussquerschnittes des in der Kurzschluss-Leitung 9c vorgesehenen Drosselventils 14 kann somit eine praktisch stufenlose Variation der Servo-Unterstützung durch den Servo-Kolben 3 vorgenommen werden, so dass im bzw. über das sog. hydraulische Getriebe, das durch die Hydraulikpumpe 2, den Zylinder 10 mit dem Servo-Kolben 3 und den Hydraulik-Kreislauf 9 gebildet wird, eine im wesentlichen stufenlose Zukopplung oder Abkopplung der Momentenunterstützung durch den Elektromotor 1 bei einem Lenkvorgang möglich ist. Um dabei nicht nur den Elektromotor 1, sondern auch das Drosselventil 14 bzw. dessen Stelleinheit 14a geeignet ansteuern zu können, verarbeitet das diese Ansteuerung übernehmende elektronische Steuergerät 5 die weiter oben bereits genannten Informationen, nämlich über das Lenkmoment ("TS"), über die Fzg.-Fahrgeschwindigkeit, die Lenkwinkel-Änderungsgeschwindigkeit, den Lenkwinkel, die Fzg.-Giergeschwindigkeit, die Temperatur des Elektromotors 1 sowie über die in den Hydraulik-Leitungen 9a, 9b herrschenden Drücke ("p").

Was den Hydraulik-Kreislauf 9 betrifft, so handelt es sich hierbei um einen geschlossenen Kreislauf, der praktisch lebensdauerbefüllt sein kann. Vorgesehen sein kann noch ein (nicht dargestelltes) Ausgleichsvolumen, das nach außen hin jedoch ebenso dicht versiegelt sein kann wie sämtliche Leitungsverbindungen, so dass praktisch keine Leckageverluste und keine Wartungsarbeiten anfallen, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

Stets erhält man mit Umsetzung der wesentlichen Merkmale eine wirkungsgradoptimierte, d.h. verbrauchsminimierte Servo-Lenkanlage mit einem sehr günstigen Rückmeldegefühl, wobei das Ausmaß der Servounterstützung nahezu beliebig einstellbar ist. Vorteilhafterweise ist das vorgeschlagene sog. hydraulische Getriebe in der Lage, niederfrequente Schwingungen zu bedämpfen, wobei auch Motorripple in der Rückmeldung vermieden werden. Das Hydraulikmedium wird vorteilhafterweise bedarfsgerecht umgepumpt, was geringe Geräuschentwicklung sowie nahezu keine Pumpverluste und wenig Abwärme zur Folge hat. Insgesamt liegt ein kompaktes System vor, das lediglich einen elektrischen Stromanschluss und Zugang zu den gewünschten Eingangsgrößen benötigt. Realisierbar ist eine aktive Servounterstützung, so bspw. ein aktiver Lenkungsrücklauf. Ermöglicht wird auch eine maximale Gestaltungsfreiheit des Lenksystems, es können nämlich die Einheit aus Elektromotor 1 und Hydraulikpumpe 2 sowie das Steuergerät 5 entweder an beliebiger Stelle am Lenkgetriebe 11 angebracht sein (maximale Integration) oder auch als diskrete Bauteile im Fahrzeug verbaut werden. In Kombination mit einer Verstell-Hydraulikpumpe ist ferner praktisch eine variable Übersetzung des sog. "hydraulischen Getriebes" erzielbar, so dass auch bei Verwendung eines üblichen Elektromotors 1 hohe Lenkkräfte bzw. eine intensive Servo-Unterstützung, die im allgemeinen bei schwereren Fahrzeugen anfallen kann, erreicht werden kann bzw. können.

## Patentansprüche

1. Servo-Lenkanlage für ein Kraftfahrzeug mit Momentenunterstützung durch einen Elektromotor (1), der während eines vom Fahrzeug-Fahrer initiierten Lenkeinschlags im entsprechenden Drehsinn angesteuert ein einen Einschlagwinkel an den lenkbaren Fahrzeug-Rädern hervorrufendes Element, insbesondere eine Zahnstange oder dgl., zusätzlich zur durch den Fahrer veranlassten Verlagerung mit verlagert, wobei der Elektromotor (1) über ein hydraulisches Getriebe mit dem einen Einschlagwinkel an den lenkbaren Fahrzeug-Rädern hervorrufenden Element verbunden ist und das hydraulische Getriebe durch einen geschlossenen Hydraulik-Kreislauf (9) mit einer vom in seinem Drehsinn veränderbaren Elektromotor (1) angetriebenen wahlweise linksdrehenden oder rechtsdrehenden und somit zweiseitig wirksamen Hydraulikpumpe (2) gebildet ist, die einen mit dem einen Einschlagwinkel an den lenkbaren Fahrzeug-Rädern hervorrufende Element verbundenen Servo-Kolben (3) drehsinnabhängig auf einer seiner beiden Seiten mit Hydraulikdruck beaufschlagt und gleichzeitig den auf der anderen Seite des in einem Zylinder (10) oder dgl. geführten Servo-Kolbens (3) anliegenden Hydraulikdruck abbaut, sowie mit einem Ventil (14) in einer die beiden Seiten des Servo-Kolbens (3) hydraulisch miteinander verbindenden Kurzschluss-Leitung (9c),
**dadurch gekennzeichnet, dass** das Ventil (14) in der die beiden Seiten des Servo-Kolbens (3) hydraulisch miteinander verbindenden Kurzschluss-Leitung (9c) ein hinsichtlich seines Durchflussquerschnitts veränderliches Drosselventil (14) ist, das von einer elektronischen Steuereinheit (5) geeignet angesteuert wird, um eine im wesentlichen stufenlose Zukopplung oder Abkopplung der Momentenunterstützung durch den Elektromotor (1) zu erzielen.

2. Servo-Lenkanlage nach Anspruch 1,
**gekennzeichnet durch** einen bürstenlosen Gleichstrommotor ("brushless DC-Motor") als Elektromotor (1).

3. Servo-Lenkanlage nach einem der vorangegangenen Ansprüche,
**dadurch gekennzeichnet, dass** die Hydraulikpumpe (2) hinsichtlich ihrer Förderleistung bei konstanter Antriebsdrehzahl und somit konstanter Drehzahl des Elektromotors (1) variabel ist.

4. Servo-Lenkanlage nach einem der vorangegangenen Ansprüche,
**dadurch gekennzeichnet, dass** in der elektronischen Steuereinheit (5) neben dem vorliegenden Lenkmoment (TS) weitere Randbedingungen (7) berücksichtigt werden, so die Fzg.-Fahrgeschwindigkeit und/oder die Lenkwinkel-Änderungsgeschwindigkeit und/oder der Lenkwinkel und/oder die Fzg.-Giergeschwindigkeit und/oder die Temperatur des Elektromotors (1) und/oder die im Hydraulik-Kreislauf (9) vorliegenden Druckverhältnisse.

## Claims

1. A power assisted steering system for a motor vehicle with torque assistance by means of an electric motor (1), which, during a steering lock initiated by the vehicle driver, activated in the corresponding direction of rotation, also displaces an element producing a steering angle at the steerable vehicle wheels, especially a toothed rack or the like, in addition to the displacement caused by the driver, wherein the electric motor (1) is connected via a hydraulic gear to the element producing a steering angle at the steerable vehicle wheels and the hydraulic gear is formed by a closed hydraulic circuit (9) with a hydraulic pump (2) which is driven by an electric motor (1) which can be varied with respect to its direction of rotation, which hydraulic pump acts so as to rotate to the left or to rotate to the right, selectively, and therefore bilaterally, and which hydraulic pump loads a servo piston (3) connected to the element producing a steering angle at the steerable vehicle wheels, depending on the direction of rotation on one of its two sides, with hydraulic pressure, and simultaneously reduces the hydraulic pressure present on the other side of the servo piston (3) guided in a cylinder (10) or the like, and also comprising a valve (14) in a short circuit line (9c) connecting the two sides of the servo piston (3) to one another hydraulically, **characterised in that** the valve (14) in the short circuit line (9c) connecting the two sides of the servo piston (3) to one another hydraulically is a throttle valve (14) which can be varied with regard to its flow cross-section and which is suitably activated by an electronic control unit (5) in order to achieve a substantially stepless coupling or decoupling of the torque assistance by the electric motor (1).

2. A power assisted steering system according to claim 1, **characterised by** a brushless d.c. motor as the electric motor (1).

3. A power assisted steering system according to any one of the preceding claims, **characterised in that** the hydraulic pump (2) is variable with respect to its delivery output at a constant drive speed and therefore a constant speed of the electric motor (1).

4. A power assisted steering system according to any one of the preceding claims, **characterised in that** further boundary conditions (7) are taken into account, apart from the present steering torque (TS), in the electronic control unit (5), for example the vehicle travelling speed and/or the steering angle changing speed and/or the steering angle and/or the vehicle yaw velocity and/or the temperature of the electric motor (1) and/or the pressure conditions present in the hydraulic circuit (9).

## Revendications

1. Système de direction assistée pour véhicule automobile avec aide au couple au moyen d'un moteur électrique (1) qui, commandé dans le sens de rotation correspondant pendant un braquage initié par le conducteur du véhicule, contribue à déplacer un élément provoquant un angle de braquage sur les roues directrices du véhicule, en particulier une crémaillère ou une pièce analogue, en plus du déplacement provoqué par le conducteur, le moteur électrique (1) étant lié à l'élément provoquant un angle de braquage sur les roues directrices du véhicule par une boîte hydraulique, la boîte hydraulique étant formée par un circuit hydraulique fermé (9) avec une pompe hydraulique (2), entraînée par le moteur électrique (1) de sens de rotation variable, tournant au choix vers la gauche ou vers la droite et donc à double effet, qui charge un piston asservi (3), guidé dans un cylindre (10) ou une pièce analogue, relié à un élément provoquant un angle de braquage sur les roues directrices du véhicule, en fonction de son sens de rotation, sur l'un de ses deux côtés, par une pression hydraulique, et supprimant en même temps la pression hydraulique appliquée sur l'autre côté, ainsi qu'à une vanne (14) dans une conduite de court-circuit (9c) reliant du point de vue hydraulique les deux côtés du piston asservi (3),
**caractérisé en ce que**
la vanne (14) qui dans la conduite de court-circuit (9c), relie du point de vue hydraulique les deux côtés du piston asservi (3) est un robinet d'étranglement (14) de section d'écoulement variable, commandé de façon appropriée par une unité de commande électronique (5), pour obtenir un couplage ou un découplage essentiellement progressif de l'aide au couple par le moteur électrique (1).

2. Système de direction assistée selon la revendication 1,
**caractérisé par**
un moteur à courant continu sans balais ("brushless DC-Motor") comme moteur électrique (1).

3. Système de direction assistée selon l'une des revendications précédentes,
**caractérisé en ce que**
la capacité de refoulement de la pompe hydraulique (2) est variable pour une vitesse de rotation d'entraînement constante et par conséquent une vitesse de rotation constante du moteur électrique (1).

4. Système de direction assistée selon l'une des revendications précédentes,
**caractérisé en ce que**,
dans l'unité de commande électronique (5), en dehors du couple de direction (TS) existant, d'autres conditions secondaires (7) sont prises en compte, comme la vitesse de roulement du véhicule et/ou la vitesse de changement de l'angle de direction et/ou l'angle de direction et/ou la vitesse d'embardée du véhicule et/ou la température du moteur électrique (1) et/ou la situation de pression qui se présente dans le circuit hydraulique (9).
